# EUROPEAN PATENT APPLICATION

(11) **EP 3 657 318 A1**
(43) Date of publication of application: **27.05.2020**
(21) Application number: 18208110.9
(22) Date of filing: 23.11.2018
(51) Int. Cl.: G06F 7/58

(54) **CLIENT-SIDE ENTROPY COLLECTION FOR SERVER-SIDE USAGE**

(71) Applicant: Nagravision S.A., 1033 Cheseaux-sur-Lausanne (CH)
(72) Inventor: Villegas, Karine, 1033 Cheseaux-sur -Lausanne (CH); Thomas, Frédéric, 1033 Cheseaux-sur -Lausanne (CH); Devallonné, Luc, 1033 Cheseaux-sur -Lausanne (CH); Servet, Patrick, 1033 Cheseaux-sur -Lausanne (CH)
(74) Representative: Hoyng Rokh Monegier LLP

(57) **Abstract**

A computer-implemented method for generating a random number in a server, the method comprising: receiving random data (20, 20', 20") from one or more remote devices (21-32) via a network (41); storing the received random data or a function of the received random data in an entropy pool (10) of the server; and constructing a random number based on at least the entropy pool.

## Description

### TECHNICAL FIELD

This disclosure generally relates to a computer-implemented method for generating a random number in a server, a data processing system such as a server for use with the method, a data processing device such as a client device for use with the method, a computer program product, for executing the method, and a computer-readable non-transitory storage medium for storing computer code for executing the method.

### BACKGROUND ART

Cryptographic algorithms and cryptographic protocols make use of cryptographic keys, which are typically based upon random numbers. Examples of cryptographic keys are secret/shared keys used by symmetric key algorithms such as Advanced Encryption Standard (AES) and Data Encryption Standard (DES), typically used for block or stream encryption, and public/private key pairs used by asymmetric key algorithms such as Riverst, Shamir, Adleman (RSA), Digital Signal Algorithm (DSA) and Elliptic curves based cryptographic schemes (such as ECDSA, ECDH, ECIES...).

Random numbers are created by a random number generator. Two kinds of random number generator can be distinguished: a True Random Number Generator (TRNG) and a Pseudo Random Number Generator (PRNG).

A TRNG, which is also known as a Nondeterministic Random Bit Generator (NRBG), is typically implemented using a hardware-based entropy source that produces a nondeterministic sequence of truly random numbers. The hardware-based entropy source is typically a physical non-deterministic entropy source, such as white noise generated by resistors, diodes, ring oscillators or other electronic device, the time between radioactive particle decay, or another signal source that is essentially random.

A PRNG, which is also known as a Deterministic Random Bit Generator (DRBG), is typically implemented as a computer algorithm that given some seed produces a deterministic sequence of pseudo random numbers. The PRNG generates random numbers using a deterministic process to generate a series of outputs derived from an initial seed state. Preferably, the initial seed state of the PRNG is provided from a TRNG. Many random number sources used in systems today are built in software and are based upon a PRNG.

In Unix-variants and Linux, there are numerous sources of entropy available to the kernel. From interrupt timing and network inter-arrival time on the low end, to hardware RNG's such as Intel's Ivy Bridge RNG and Whitewood's Quantum Random Number Generator on the high end, entropy is produced at various rates. In Linux, this entropy is then fed in to the kernel entropy pool where it is hashed for use in two separate interfaces: (i) /dev/random provides random data that is nearly 100% entropy, if there is no entropy in the pool /dev/random will block until the OS generates more entropy; and (ii) /dev/urandom which does not block and will hand out data from its PRNG regardless of the amount of entropy in the entropy pool. The default size of the kernel entropy pool is 4096 bits but can be modified via a kernel configuration option. Applications can get random numbers from /dev/random or /dev/urandom as needed. Linux uses naturally occurring chaotic events on the local system to generate entropy for the kernel pool. These events, such as disk IO events, network packet arrival times, keyboard presses, and mouse movements, are the primary sources of entropy on many computer systems. The amount of entropy generated from these sources is directly proportional to the amount of activity on each source.

The quality of the random numbers generated by a PRNG may be expressed in the randomness of these random numbers. To this end, the US National Institute of Standards and Technology (NIST), for example, has developed the SP 800-22 statistical test suite for evaluating randomness in a data set, and SP 800-90 (in parts A, B, and C), which defines the design and testing criteria that a random-number generator RNG must meet to be considered random enough for cryptographic applications. The recommended architecture for a NIST SP 800-90 compliant RNG is to seed a cryptographic-quality PRNG with an unknown seed value and then use the PRNG for a period of time, or to produce a quantity of random data. The PRNG is then re-seeded and used for a while before being re-seeded again. The seed for this PRNG should be a secret, random input derived from an entropy source, preferably a TRNG. This entropy source needs to be controlled and monitored for factors that may affect the quality of the generated entropy such as operating temperature, aging, susceptibility to electronic noise and upset, so that the randomness of their output cannot be undermined by external actors.

The availability of a reliable entropy source can be problematic in networked environments such as cloud environments, backend systems, or virtual machines e.g. managing a network of secure connected devices, as such environments are typically software-based solutions running on an existing platform.

Examples of secure connected devices are Internet-of-Things (IoT) devices, set-top box (STB) devices and smart phones. In such environments access to kernel level data or low-level functions such as /dev/random may be restricted or unavailable and there is typically no physical entropy source available, for example because there is no interaction with a keyboard, mouse, random execution pipeline or other unpredictable hardware events that could be used as entropy source. However, these environments often provide security services such as authentication, integrity checks, secure channels, which require a high quality random number generator.

Existing solutions to this problem are deemed less secure and therefore not preferred. An example of such existing solution involves storage and use of pre-generated random seeds, which is considered complex to deploy, maintain and renew in the long run. Furthermore, the storage of pre-generated random seeds, which typically involves a data file containing the seeds, requires high level of secrecy, as the integrity of this file is very critical. Such high level of secrecy cannot always be guaranteed. Another example involves weak random number generation and accepting that the random numbers are not high quality, which may result in a security risk that is unacceptable depending on the target of the system, e.g. in safety critical systems.

Moreover, use of hardware security modules (HSM) is not always possible in cloud or virtual machine environments. For example, deploying a physical appliance in a cloud environment is not always feasible. In case of HSM, it would be necessary to trust the hardware and services providers, which is not always possible. Furthermore, secure implementation of an HSM in a cloud environment can be costly.

### SUMMARY

This disclosure presents a solution for high quality random number generation in networked environments such as but not limited to cloud environments, backend systems or virtual machines managing a network of secure connected devices.

According to an aspect of the disclosure, a computer-implemented method is proposed for generating a random number in a server. The method can comprise receiving random data from one or more remote devices via a network. The method can further comprise storing the received random data or a function of the received random data in an entropy pool of the server. The method can further comprise constructing a random number based on at least the entropy pool.

In an embodiment the method can further comprise generating random data in the server and storing the generated random data in said entropy pool.

In an embodiment the method can further comprise updating the entropy pool each time random data is received from the one or more remote devices.

In an embodiment the random data can be generated in the one or more remote devices based on at least one of: an embedded physical entropy source; a true random number generator; captured unpredictable events.

In an embodiment the method can further comprise: setting up a secure communication channel between the server and a remote device; and receiving the random data from the remote device via the secure communication channel.

In an embodiment the random data is one of: data added to a payload part of an existing data packet; data added to a header part of an existing data packet.

In an embodiment the method can further comprise: analyzing the data stored in the entropy pool to determine an entropy quality; and constructing the random number depending on the entropy quality.

In an embodiment at least one of the remote devices can be a trusted client device comprising a trusted true random number generator TRNG for generating random data.

In an embodiment the true random number generator TRNG can be one of: a subscriber identification module SIM based TRNG; a hardware security module HSM based TRNG.

In an embodiment the random data received from the trusted client device can be used as an initial seed state to initialize the entropy pool.

In an embodiment the one or more remote devices can comprise at least one of: an embedded subscriber identification module eSIM; a set-top box STB; an Internet of Things IoT device.

According to an aspect of the disclosure, a data processing system is proposed, such as a server, configured to perform one or more of the above described steps.

According to an aspect of the disclosure, a data processing device is proposed, such as a client device, for use with a method performing one or more of the above described steps. The data processing device can be arranged to generate random data and transmit the random data to a server for storing the random data or a function of the received random data in an entropy pool of the server.

According to an aspect of the disclosure, a computer program product is proposed that is implemented on a computer-readable non-transitory storage medium, the computer program product comprising computer executable instructions which, when executed by a processor, cause the processor to carry out one or more of the above described steps.

According to an aspect of the disclosure a computer-readable non-transitory storage medium is proposed comprising computer executable instructions which, when executed by a processor, cause the processor to carry out one or more of the above described steps.

The random data may be generated in the remote device or client device before transmission to the server. Alternatively or additionally, the random data may be derivable from a data exchange between the device and the server, for example by the server extracting data randomly from the exchanged data or by the server measuring delays or other timing aspects from the data exchange between the device and the client.

The term server as used in the present disclosure is to be understood to mean one or more servers. The server may be a physical server or a virtual server. The server may be implemented as one or more cloud environments, one or more backend systems, one or more virtual machines e.g. managing a network of secure connected devices, or any other networked environment providing server functions to remote devices.

The terms client device, remote device and data processing devices are interchangeable.

Hereinafter, embodiments will be described in further detail. It should be appreciated, however, that these embodiments may not be construed as limiting the scope of protection for the present disclosure.

### BRIEF DESCRIPTION OF DRAWINGS

Embodiments will now be described, by way of example only, with reference to the accompanying schematic drawings in which corresponding reference symbols indicate corresponding parts, and in which:
FIG. 1 shows an exemplary network architecture;
FIG. 2 shows a random data collection into an entropy pool according to an exemplary embodiment; and
FIG. 3 shows a flow chart of a method according to an exemplary embodiment.

The figures are meant for illustrative purposes only, and do not serve as restriction of the scope or the protection as laid down by the claims.

### DESCRIPTION OF EMBODIMENTS

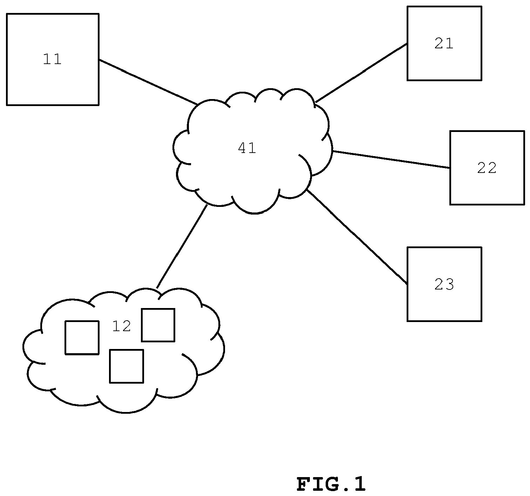

FIG. 1 shows an exemplary simplified network architecture that may be used to perform client-side entropy collection for service side usage. Client devices 21-23 may be connected to one or more servers 11, 12 via a network 41. In this example the server 12 is implemented as a cloud service, possibly consisting of multiple physical and/or virtual servers.

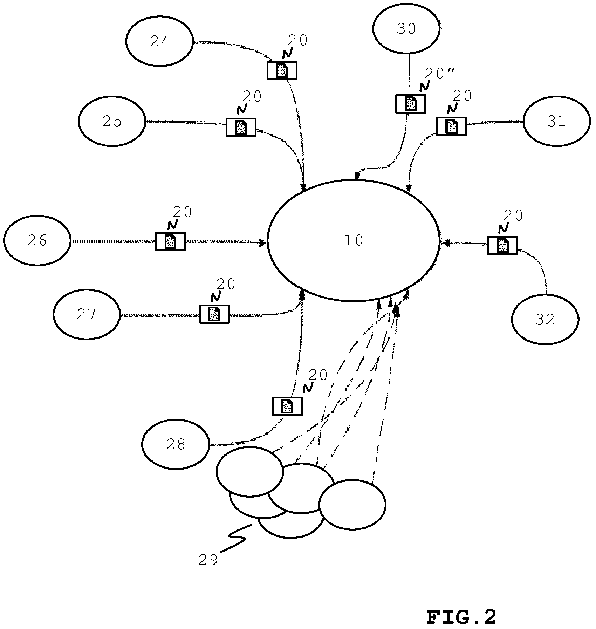

FIG. 2 visualizes an exemplary random data collection into an entropy pool 10. The entropy pool 10 may be implemented in a server, such as server 10 or cloud service 11. In the example of FIG. 2, client devices 24-28 and 31-32 may include a true random number generator TRNG for generating random data 20. The random data 20 may be transmitted to the server, where the random data 20 or a function of the random data may be stored in the entropy pool 10. A function of the random data may be used to avoid counterfeit. Client devices 29 may include other means for generating random data 20' - not shown in FIG. 2; transmitted via the dotted arrows between the client devices 29 and the entropy pool 10 -, which may be weak compared to the random data 20 from a TRNG. In addition to true random data 20, this weak random data 20' may still be used to add to the entropy pool 10. Client device 30 may be a trusted client with a TRNG. The random data 20" from the TRNG of the trusted client 30 may be used as an initialization at an initial seed state to initialize the entropy pool 10.

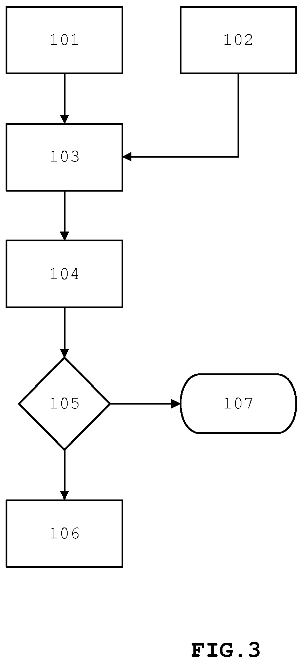

FIG. 3 shows exemplary steps of a method for generating a random number in a server 11, 12 based on random data 20, 20', 20" received from one or more remote devices 21-32. In step 101 random data 20, 20', 20" may be received from one or more remote devices 21-32 via the network 41. In step 103 the received random data 20, 20', 20" or a function of the received random data may be stored in the entropy pool 10 of the server 11, 12. In step 106 a random number is constructed in the server 11, 12 based on at least the entropy pool. The server 11, 12 may also generate random data for addition to the entropy pool 10, which is shown in step 102. The data stored in the entropy pool 10 may be analyzed in step 104 to determine the quality of the entropy. In step 105 it may be determined whether the entropy quality is good enough to allow the random number to be constructed from the entropy pool 10. If not, no random number will be constructed, and the process stops in step 107. At a later moment in time a new attempt to construct the random number may then be attempted. If the entropy quality is above a predetermined threshold, the random number may be constructed resulting in the random number being generated.

Non-limiting examples of remote devices 21-32 are proposed and may comprise: an eSIM, a set-top box, hardware IoT devices, any Original Equipment Manufacturer (OEM) that typically include an embedded physical entropy source, and a TRNG (preferably certified). One or more of the remote devices 29 may be configured to capture unpredictable events as random data.

The remote devices 21-32 may be connected to the server 11, 12 via a secure channel. The remote devices 21-32 may send random data, preferably via the secure channel, as small payload additions to exchanged messages.

The remote devices 21-32 may generate locally and independently - in space and time - random bytes. These random bytes may be transferred to the server 11, 12 independently in time. Preferably the transfer is secured, for example by using a DTLS secure channel. The random bytes are thus protected in confidentiality during the transfer. The server 11, 12 may, possibly in addition to entropy that it can collect locally, construct a preferably large entropy pool 10 from the collection of random bytes 20, 20', 20" received from the clients 21-32. The server may dynamically update the pool 10 each time a device 21-32 communicates with the server 11, 12 or the pool 10. Using the pool 10, the server 11, 12 may analyze the entropy quality and construct a high quality random number generator.

Increasing the number of devices 21-32 may increase the entropy quality. Increasing the number of connections between devices 21-32 and server 11, 12 could increase the entropy quality. Given the number of connected devices 21-32, even if for some devices 29 the entropy source quality is not very high or altered, the server 11, 12 may be able to construct a random number generator.

A specific trusted client 30 may be installed in the network as a trusted TRNG provider to the server 11, 12. The trusted TRNG is for example based on a SIM or a HSM. The random data 20" from the trusted client 30 may be used to improve the quality of the entropy of the pool 10. Alternatively or additionally, the random data 20" from the trusted client 30 may be used to initialize the pool 10 at first deployment time (for example replacing a pre-provisioning seeds file).

One or more embodiments may be implemented as a computer program product for use with a computer system. The program(s) of the program product may define functions of the embodiments, including the methods described herein, and can be contained on a variety of computer-readable storage media. The computer-readable storage media may be non-transitory storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information may be permanently stored; and (ii) writable storage media, e.g., hard disk drive or any type of solid-state random-access semiconductor memory, flash memory, on which alterable information may be stored.

Thanks to the present disclosure, it is thus possible to use connected devices as source of entropy. Those devices, as connected to the server side with a secure channel are able to send random bytes to it, for example as small payloads additions to exchanged messages.

## Claims

1. A computer-implemented method for generating a random number in a server (11, 12), **characterized in that** the method comprising:
receiving (101) random data (20, 20', 20") from one or more remote devices (21-32) via a network (41);
storing (103) the received random data or a function of the received random data in an entropy pool (10) of the server;
constructing (106) a random number based on at least the entropy pool.

2. The method according to claim 1, **characterized in that** it further comprises generating (102) random data in the server and storing the generated random data in said entropy pool.

3. The method according to claim 1 or 2, **characterized in that** it further comprises updating the entropy pool each time random data is received from the one or more remote devices.

4. The method according to any one of the preceding claims, **characterized in that** it the random data is generated in the one or more remote devices based on at least one of: an embedded physical entropy source; a true random number generator; captured unpredictable events.

5. The method according to any one of the preceding claims, **characterized in that** it further comprises: setting up a secure communication channel between the server and a remote device; and receiving the random data from the remote device via the secure communication channel.

6. The method according to any one of the preceding claims, **characterized in that** it the random data is one of: data added to a payload part of an existing data packet; data added to a header part of an existing data packet.

7. The method according to any one of the preceding claims, **characterized in that** it further comprises : analyzing (104) the data stored in the entropy pool to determine (105) an entropy quality; and constructing the random number depending on the entropy quality.

8. The method according to any one of the preceding claims, **characterized in that** at least one of the remote devices is a trusted client device (30) comprising a trusted true random number generator (TRNG) for generating random data (20").

9. The method according to claim 8, **characterized in that** the true random number generator (TRNG) is one of: a subscriber identification module (SIM) based true random number generator (TRNG); a hardware security module (HSM) based true random number generator (TRNG).

10. The method according to claim 8 or 9, **characterized in that** the random data received from the trusted client device is used as an initial seed state to initialize the entropy pool.

11. The method according to any one of the preceding claims, **characterized in that** the one or more remote devices comprises at least one of: an embedded subscriber identification module (eSIM); a set-top box (STB); an Internet of Things (IoT) device.

12. A data processing system (11, 12), such as a server, **characterized in that** it is configured to perform the steps of the method according to any one of the claims 1-11.

13. A data processing device (21-32), such as a client device, for use with the method according to any one of the claims 1-11, **characterized in that** the data processing device is arranged to generate random data (20, 20', 20") and transmit the random data to a server (11, 12) for storing the random data or a function of the received random data in an entropy pool (10) of the server.

14. A computer program product, implemented on a computer-readable non-transitory storage medium, the computer program product **characterized in that** it comprises computer executable instructions which, when executed by a processor, cause the processor to carry out the steps of the method according to any one of the claims 1-11.

15. A computer-readable non-transitory storage medium **characterized in that** it comprises computer executable instructions which, when executed by a processor, cause the processor to carry out the steps of the method according to any one of the claims 1-11.
